# EUROPÄISCHE PATENTSCHRIFT

(11) **EP 2 683 510 B1**
(45) Veröffentlichungstag und Bekanntmachung des Hinweises auf die Patenterteilung: **01.05.2019**
(21) Anmeldenummer: 12721685.1
(22) Anmeldetag: 08.03.2012
(51) Int. Cl.: B23B 27/04

(54) **SCHNEIDEINSATZ**
CUTTING INSERT
INSERT DE COUPE

(30) Priorität: 09.03.2011 AT 1312011 U
(43) Veröffentlichungstag der Anmeldung: 15.01.2014
(73) Patentinhaber: Ceratizit Austria Gesellschaft m.b.H., 6600 Reutte (AT)
(72) Erfinder: FRIEDL, Roland, A-6671 Weissenbach (AT); SPIELMANN, Hannes, A-6632 Ehrwald (AT)
(86) Internationale Anmeldenummer: PCT/AT2012/000055
(87) Internationale Veröffentlichungsnummer: WO 2012/119168

(56) Entgegenhaltungen:
- EP-A1- 0 454 824
- EP-A2- 1 980 348
- WO-A1-2007/095656
- DE-A1- 19 720 022

## Beschreibung

Die vorliegende Erfindung betrifft einen Schneideinsatz für ein Schneidwerkzeug zur spanenden Bearbeitung eines Werkstücks gemäß dem Oberbegriff des Anspruchs 1 und ein Verfahren gemäß dem Oberbegriff des Anspruchs 13. Ein solcher Schneideinsatz und ein solches Verfahren sind aus WO 2007/095656 A1 bekannt.

Schneideinsätze für Schneidwerkzeuge zur spanenden Bearbeitung eines Werkstücks werden insbesondere zur spanenden Bearbeitung von metallischen Werkstücken mittels Drehen eingesetzt. Beim Drehen wird das zu bearbeitende Werkstück gedreht und der fest eingespannte Schneideinsatz wird an dem drehenden Werkstück (in allen Richtungen) bewegt, um einen Span abzuheben. Beim Stech-Drehen werden durch den Schneideinsatz Einstiche in das rotierende Werkstück eingebracht. Dabei kann der Einstich in die Mantelfläche des rotierenden Werkstückes in radialer Richtung erfolgen, was durch einen Vorschub des Schneideinsatzes in radialer Richtung realisierbar ist (Radial-Stech-Drehen). Ferner kann der Einstich in die Stirnseite des rotierenden Werkstückes in axialer Richtung erfolgen, was durch einen Vorschub des Schneideinsatzes in axialer Richtung realisierbar ist (Axial-Stech-Drehen). Auch sind Einstiche schräg zu der axialen Richtung (d.h. in dem Bereich zwischen axialer und radialer Richtung) möglich (Kopieren). Im Bereich der Schwerzerspanung wird dabei insbesondere mit hohen Schneidkräften, großen und schweren Werkstücken sowie mit hohen Vorschüben gearbeitet. Dabei entstehen auch vergleichsweise große Mittenspandicken.

Allgemein besteht die Anforderung an Schneideinsätze, dass diese trotz der hohen, auftretenden Kräfte eine exakte Bearbeitung des Werkstückes und eine gute Spanbildung bereitstellen sowie hohe Standzeiten aufweisen. Diese Anforderungen bestehen insbesondere bei Schneideinsätzen, die zum Stech-Drehen ausgebildet sind und besonders im Bereich der Schwerzerspanung.

Aus der Druckschrift DE 298 04 257 U1 ist ein Schneideinsatz bekannt, der eine vordere Schneidkante aufweist, die mindestens zwei Schneidkantenabschnitte aufweist. Dabei sind jeweils zwei benachbarte Schneidkantenabschnitte durch einen gemeinsamen Übergangsabschnitt miteinander verbunden, wobei sich die benachbarten Schneidkantenabschnitte jeweils überlappen. Auf diese Weise wird eine Spanteileinrichtung gebildet.

DE 197 20 022 A1 zeigt einen Schneideinsatz für die spanabhebende Bearbeitung von metallischen Werkstücken. Erweist eine durch eine Spanfläche und eine Freifläche begrenzte, sich zwischen zwei Schneidecken erstreckende Schneidkante auf, die zwei unter Einschluss eines stumpfen Winkels im Bereich einer dachförmigen Spitze ineinander übergehende, zumindest teilweise wirksame Schneidkantenabschnitte aufweist.

Die Aufgabe der vorliegenden Erfindung besteht darin, einen Schneideinsatz bereitzustellen, der im Einsatz eine exakte Bearbeitung eines zu bearbeitenden Werkstückes und eine gute Spanbildung bereitstellt und der ferner eine hohe Standzeit und Prozesssicherheit aufweist.

Die Aufgabe wird durch einen Schneideinsatz gemäß Anspruch 1 sowie durch ein Verfahren gemäß Anspruch 13 gelöst. Vorteilhafte Weiterbildungen der Erfindung sind in den Unteransprüchen angegeben.

Dadurch, dass die Zentrumschneidkante und die zwei Nebenschneidkanten versetzt zueinander angeordnet sind, wird im Einsatz eine Spanteilung bewirkt. Insbesondere werden so viele Späne erhalten, wie zueinander versetzt ausgebildete Schneidkanten vorgesehen sind. Sind ausschließlich die Zentrumschneidkante und die zwei Nebenschneidkanten vorgesehen, so werden im Einsatz drei Späne erhalten. Solch eine Spanteilung ist vorteilhaft im Hinblick auf eine gute Spanbildung und einen guten Abtransport der gebildeten Späne.

Eine Kante an einem Schneideinsatz, der zum Stech-Drehen ausgebildet ist, bildet dann eine Schneidkante und schneidet im Einsatz glatt und spanbildend in das drehende bzw. rotierende Werkstück ein, wenn sich diese Kante senkrecht zu der Bewegungsrichtung des Materials des Werkstücks im Berührungsbereich der Kante mit dem Werkstück erstreckt (ideale Schneid-Ausrichtung) oder nur leicht zu dieser idealen Schneid-Ausrichtung geneigt ist. Je mehr eine Kante eines Schneideinsatzes relativ zu solch einer idealen Schneid-Ausrichtung geneigt ist, desto weniger schneidet sie in das Material des Werkstücks ein. Dies gilt insbesondere dann, wenn die Kante derart geneigt ist, dass sie sich im Einsatz im Berührungsbereich der Kante mit dem Werkstück zu einem erheblichen Anteil parallel zu der Bewegungsrichtung des Materials des Werkstücks erstreckt. Bisher war in dem Fachgebiet die allgemein herrschende Meinung, dass dann, wenn an einem Schneideinsatz mehrere, zueinander versetzt ausgebildete Schneidkanten vorzusehen sind, diese Schneidkanten miteinander überlappen müssen oder zumindest direkt aneinander anschließend ausgebildet sein müssen. Dementsprechend ist nach dieser herrschenden Meinung der Übergangsbereich zwischen den Schneidkanten derart auszubilden, dass sich die Schneidkanten bezüglich einer Projektion auf das zu bearbeitende Werkstück (bzw. auch entsprechend bezüglich einer Projektion auf eine Auflagefläche des Schneideinsatzes) überlappen oder zumindest direkt aneinander anschließend ausgebildet sind. Dies wird beispielsweise durch einen S-förmigen Übergangsbereich erzielt. Auf diese Weise wird sichergestellt, dass das Material des Werkstückes über den gesamten Kantenverlauf der Schneidkanten hinweg durch die Schneidkanten glatt eingeschnitten und spanend abgetragen wird.

Demgegenüber weisen gemäß der vorliegenden Erfindung die zwei Übergangskanten zumindest einen Abschnitt auf, der nur relativ gering (2° ≤ n ≤ 20°) relativ zu der Höhenrichtung geneigt ist und dementsprechend im Einsatz im Berührungsbereich der Übergangskante mit dem Werkstück nur relativ gering gegenüber der Bewegungsrichtung des Materials des Werkstücks geneigt ist (wobei die tatsächliche Neigung im Einsatz in Abhängigkeit von einem, an dem Werkzeughalter eingestellten Schneidenanstellwinkel geringfügig variieren kann). Aufgrund der erfindungsgemäßen Anordnung der Zentrumschneidkante und der Nebenschneidkanten sowie aufgrund der Ausbildung dieses Abschnittes in einem Kanten-überlappungsfreien Bereich gelangt dieser Abschnitt im Einsatz in Eingriff mit Material des zu bearbeitenden Werkstückes. Dementsprechend ist der erfindungsgemäße Schneideinsatz nicht durchgehend schneidend ausgebildet. Vielmehr ist zwischen der Zentrumschneidkante und den zwei Nebenschneidkanten jeweils mindestens ein "nicht-schneidender Abschnitt" vorgesehen. Es hat sich gezeigt, dass dennoch auch in diesem "nicht-schneidenden Abschnitt" Material des zu bearbeitenden Werkstückes abgetragen wird. Dieses wird jedoch nicht glatt eingeschnitten, wie es bei einer idealen Schneid-Ausrichtung einer Kante der Fall ist, sondern eher durch die im Bereich des "nicht-schneidenden Abschnittes" auftretenden Kräfte von dem drehenden Werkstück abgezogen. Insbesondere treten in diesem Bereich hohe Scherkräfte auf. Die an der Zentrumschneidkante sowie die an den Nebenschneidkanten gebildeten Späne weisen dadurch jeweils an ihrem seitlichen Randbereich (bzw. an beiden seitlichen Randbereichen), der an dem "nicht-schneidenden Abschnitt" der betreffenden Übergangskante abgetrennt wurde, seitlich abgeschertes Material sowie dadurch resultierende seitliche Einrisse (d.h. randseitige Defekte) auf. Dadurch wird ein Spanbruch unterstützt, was wiederum im Hinblick auf den Abtransport der erzeugten Späne vorteilhaft ist.

Weiterhin hat sich überraschend gezeigt, dass bei dem erfindungsgemäßen Schneideinsatz durch die Vorsehung von zumindest zwei "nicht-schneidenden Abschnitten" im Einsatz eine Positions-Stabilisierung des Schneideinsatzes relativ zu dem drehenden Werkstück erzielt wird. Dies wird darauf zurückgeführt, dass im Bereich der "nicht-schneidenden Abschnitte" der Übergangskanten dem sich daran vorbeidrehenden Material des Werkstücks große Kräfte entgegengesetzt werden und dadurch zwischen dem Schneideinsatz und dem drehenden Werkstück eine seitliche Führung bereitgestellt wird. Im Hinblick auf die Positions-Stabilisierung ist dabei insbesondere vorteilhaft, dass die an den beiden Übergangskanten auftretenden Kräfte in Seitenrichtung entgegengesetzt zueinander wirken und vorzugsweise auch symmetrisch zueinander sind. Weiterhin ist vorteilhaft, dass die Randbereiche der verschiedenen Schneidkanten dadurch, dass die jeweils benachbarte(n) Schneidkante(n) seitlich beabstandet ist/sind, stabil und massiv ausgebildet sind. Die Gefahr eines Materialausbruchs im Randbereich der Schneidkanten und der sich daran anschließenden Spanflächen, wie sie beispielsweise bei überlappenden Schneidkanten oder direkt aneinander anschließend ausgebildeten Schneidkanten besteht, ist dadurch erheblich reduziert. Darüber hinaus zeichnet sich der erfindungsgemäße Schneideinsatz dadurch aus, dass er kostengünstig herstellbar ist. Insbesondere kann er einfach durch Pressen hergestellt werden, ohne dass weitere, formgebende Bearbeitungsschritte erforderlich sind. Insbesondere wird der Schneideinsatz pulvermetallurgisch durch Pressen entsprechender Pulver und durch anschließendes Sintern derselben hergestellt. Als Materialien für den Schneideinsatz werden insbesondere Hartmetalle eingesetzt.

Der erfindungsgemäße Schneideinsatz ist insbesondere zum Stech-Drehen ausgebildet. Insbesondere bildet er eine Stechplatte zum Stech-Drehen. Gemäß einer vorteilhaften Weiterbildung wird der Schneideinsatz durch eine Schwerzerspanungs-Stechplatte gebildet. Die bodenseitige Auflagefläche dient zur Auflage des Schneideinsatzes auf eine entsprechende Fläche einer Aufnahme eines Werkzeughalters. Durch die bodenseitige Auflagefläche (sowie in der Regel durch mindestens eine weitere Seitenfläche des Schneideinsatzes) wird in der Regel auch eine definierte Positionierung des Schneideinsatzes relativ zu dem Werkzeughalter gewährleistet. Die bodenseitige Auflagefläche kann durch genau eine ebene Fläche gebildet werden. Die bodenseitige Auflagefläche kann aber auch einen gekrümmten Verlauf aufweisen und/oder mehrere, relativ zueinander geneigte Teilflächen aufweisen. Beispielsweise kann die bodenseitige Auflagefläche durch zwei zueinander geneigte Teilflächen, die dachförmig angeordnet sind, gebildet werden. Ferner sind beispielsweise auch bodenseitige Auflageflächen, die eine wellenförmige Struktur aufweisen, möglich. Wird die bodenseitige Auflagefläche durch genau eine ebene Fläche gebildet, so bildet diese Fläche gleichzeitig die Haupterstreckungsebene der Auflagefläche. Ansonsten wird die Haupterstreckungsebene derart ermittelt, dass die Auflagefläche durch eine Ebene approximiert wird. Insbesondere wird für diese Approximation der Betrag des Abstandes zwischen der Auflagefläche und der betreffenden Approximationsebene über die gesamte Auflagefläche integriert, wobei der Abstand jeweils senkrecht zu der Approximationsebene gemessen wird. Die Approximationsebene, für welche das Integral minimal ist, bildet die Haupterstreckungsebene der Auflagefläche. Die Haupterstreckungsebene der bodenseitige Auflagefläche wird vorliegend als Bezugsebene für die verschiedenen Richtungsbezeichnungen verwendet: senkrecht zu der Haupterstreckungsebene der Auflagefläche verläuft die Höhenrichtung. Parallel zu der Haupterstreckungsebene der Auflagefläche verlaufen die Seitenrichtung und die Tiefenrichtung. Dabei verläuft die Seitenrichtung insbesondere parallel zu einer Haupterstreckungsrichtung der Zentrumschneidkante. Dies gilt für den bevorzugten Fall, dass die Haupterstreckungsrichtung der Zentrumschneidkante parallel zu der Haupterstreckungsebene der Auflagefläche verläuft. Für den Fall, dass die Haupterstreckungsrichtung der Zentrumschneidkante schräg zu der Haupterstreckungsebene der Auflagefläche verläuft, wird die Zentrumschneidkante zunächst auf die Haupterstreckungsebene der Auflagefläche projiziert und dann die Haupterstreckungsrichtung der projizierten Zentrumschneidkante als Seitenrichtung verwendet. Weist die Zentrumschneidkante einen gekrümmten Verlauf auf, so wird deren Verlauf (gegebenenfalls nach Projektion der Zentrumschneidkante auf die Haupterstreckungsebene der Auflagefläche) durch eine Gerade approximiert, wobei diese Gerade dann die Haupterstreckungsrichtung bildet. Die Tiefenrichtung steht insbesondere senkrecht auf der Seitenrichtung (und der Höhenrichtung).

Gemäß der vorliegenden Erfindung weist der Schneideinsatz als Schneidkanten zumindest die Zentrumschneidkante und beidseitig davon die zwei Nebenschneidkanten auf. Dabei kann der Schneideinsatz an der betreffenden Schneide auch noch weitere Schneidkanten und/oder Übergangskanten aufweisen. Beispielsweise können sich diese beidseitig und seitlich an die zwei Nebenschneidkanten anschließen. Die Kanten (Schneidkanten und/oder Übergangskanten) können dabei über ihren gesamten Verlauf oder auch nur abschnittsweise, wie es in dem Fachgebiet bekannt ist, gerundet sein und/oder mit einer Phase versehen sein. Unter einem "Kanten-überlappungsfreien" Bereich wird verstanden, dass sich die betreffenden Kanten (Schneidkanten und Übergangskanten, insbesondere die in Anspruch 1 erwähnten Zentrumschneidkante, die zwei Nebenschneidkanten und die zwei Übergangskanten), bezüglich jeglicher, senkrecht zu der Seitenrichtung verlaufenden Blickrichtung in diesem Bereich nicht überlappen. Vorliegend bedeutet dies, dass der betreffende Abschnitt der Übergangskante (mit der relativ geringen Neigung relativ zu der Höhenrichtung) unabhängig von dem Schneidenanstellwinkel des Schneideinsatzes im Einsatz in Eingriff mit dem Material des Werkstücks gelangt.

Gemäß einer Weiterbildung weisen die Übergangskanten jeweils in einem Kanten-überlappungsfreien Bereich zumindest über einen Abschnitt hinweg eine Neigung n mit 5° ≤ n ≤ 15° relativ zu der Höhenrichtung auf. Innerhalb dieses engeren Winkelbereiches wurden die oberhalb in Bezug auf den weiteren Winkelbereich erläuterten Vorteile in stärkerem Maße erzielt. Dabei ist sowohl in Bezug auf den weiteren Winkelbereich von 2° ≤ n ≤ 20° als auch in Bezug auf den engeren Winkelbereich von 5° ≤ n ≤ 15° zu berücksichtigen, dass eine Neigung innerhalb des jeweiligen Winkelbereiches bei einem geradlinigen Verlauf der Übergangskante in diesem Abschnitt bedeutet, dass deren (über den Abschnitt hinweg konstant bleibende Neigung) innerhalb des jeweiligen Winkelbereiches liegt. Bei einem gekrümmten Verlauf der Übergangskante in diesem Abschnitt bedeutet dies, dass diese in jedem Punkt (innerhalb dieses Abschnittes) eine Neigung aufweist, die innerhalb des jeweiligen Winkelbereiches liegt. Der Abschnitt, in dem die Neigung n der Übergangskante in dem jeweiligen Winkelbereich liegt, erstreckt sich insbesondere entlang der Seitenrichtung über mindestens 0,04 mm, insbesondere über mindestens 0,13 mm.

Gemäß einer Weiterbildung ist der Kantenverlauf der Zentrumschneidkante, der zwei Übergangskanten und der zwei Nebenschneidkanten im Wesentlichen spiegelsymmetrisch relativ zu einer, parallel zu der Höhenrichtung und senkrecht zu einer Haupterstreckungsrichtung der Zentrumschneidkante verlaufenden Symmetrieebene. Solch eine Symmetrie wirkt sich vorteilhaft in Bezug auf die Prozessstabilität, insbesondere in Bezug auf eine Positions-Stabilisierung des Schneideinsatzes relativ zu dem sich drehenden Werkstück, aus. Denn durch solch eine Symmetrie sind die im Einsatz auftretenden Kräfte, insbesondere in dem bevorzugten Fall, dass die zu bearbeitende Werkstück-Oberfläche senkrecht zu der Symmetrieebene des Schneideinsatzes ausgerichtet ist, ebenfalls im Wesentlichen symmetrisch zu der Symmetrieebene. Gemäß einer Weiterbildung ist/sind auch der Flächenverlauf der sich an diese Schneidkanten bzw. Kanten (Zentrumschneidkante, Übergangskanten und Nebenschneidkanten) in Tiefenrichtung anschließenden Spanflächen bzw. Flächen (Zentrumspanfläche, Übergangsflächen und Nebenspanflächen) im Wesentlichen symmetrisch zu der Symmetrieebene ausgebildet. In entsprechender Weise sind vorzugsweise auch die sich an diese Schneidkanten bzw. Kanten (Zentrumschneidkante, Übergangskanten und Nebenschneidkanten) in Höhenrichtung anschließenden Freiflächen (Zentrumfreifläche, Übergangsfreiflächen und Nebenfreiflächen) im Wesentlichen symmetrisch zu der Symmetrieebene ausgebildet. Durch diese im Wesentlichen symmetrische Ausbildung der Spanflächen, Flächen und/oder Freiflächen werden die Prozessstabilität des Schneideinsatzes und insbesondere die oberhalb erläuterten Effekte bzgl. der Positions-Stabilisierung weiter erhöht. Gemäß einer Weiterbildung ist der gesamte Schneideinsatz im Wesentlichen spiegelsymmetrisch zu der Symmetrieebene ausgebildet. Dabei ist grundsätzlich ausreichend, dass bei den oberhalb genannten Symmetrien eine im Wesentlichen symmetrische Ausbildung vorliegt, da, wie in dem Fachgebiet bekannt ist, die oberhalb genannten Vorteile auch bei geringfügigen Abweichungen von den genannten Symmetrien noch erzielt werden können. Insbesondere liegt bei den oberhalb genannten Weiterbildungen und Varianten jeweils eine exakt symmetrische Ausbildung vor.

Allgemein ist bei den verschiedenen, im Zusammenhang mit dem Kantenverlauf (der Zentrumschneidkante, der Übergangskanten und der Nebenschneidkanten) erläuterten Merkmalen bevorzugt, dass zumindest in dem in Tiefenrichtung an die Kanten anschließenden Bereich die jeweiligen Flächen (Zentrumspanfläche, Übergangsflächen und Nebenspanflächen) weitgehend in ihrem Verlauf an den Verlauf der Kanten (Zentrumschneidkante, Übergangskanten und Nebenschneidkanten) angepasst sind. Dementsprechend gelten die in Bezug auf den Verlauf der Kanten erwähnten Merkmale gemäß vorteilhafter Weiterbildungen auch entsprechend in Bezug auf den Verlauf der sich in Tiefenrichtung daran anschließenden Flächen, auch wenn darauf nicht jedesmal explizit hingewiesen wird. Alternativ ist möglich, dass sich die an die Kanten in Tiefenrichtung anschließenden Flächen in ihrem Verlauf auch ändern. Insbesondere kann die Höhendifferenz zwischen Zentrumspanfläche und den Nebenspanflächen in Tiefenrichtung auch zu- oder abnehmen. Ferner besteht auch die Möglichkeit, dass die sich an die Kanten in Tiefenrichtung anschließenden Flächen (Zentrumspanfläche, Übergangsflächen und Nebenspanflächen) Rippen, Noppen, anderweitige Oberflächenstrukturierungen und/oder einen gekrümmten Verlauf aufweisen.

Gemäß einer Weiterbildung ist der Kantenverlauf der Zentrumschneidkante, der zwei Übergangskanten und der zwei Nebenschneidkanten durchgehend Kanten-überlappungsfrei ausgebildet. Dadurch wird eine stabile und massive Ausbildung der Randbereiche der Schneidkanten erzielt, so dass das Risiko eines Materialausbruchs in diesen Bereichen reduziert wird. Gemäß einer Weiterbildung ist auch der Flächenverlauf der sich daran anschließenden Zentrumspanfläche, der Übergangsflächen und der Nebenspanflächen überlappungsfrei ausgebildet. Dies ist ebenfalls im Hinblick auf die Vermeidung eines Materialausbruches vorteilhaft.

Gemäß einer Weiterbildung weisen die Übergänge zwischen Zentrumschneidkante und den Übergangskanten und/oder die Übergänge zwischen den Übergangskanten und den Nebenschneidkanten jeweils einen Krümmungsradius von ≤ 0,3 mm aufweist. Insbesondere ist bevorzugt, dass zumindest die Krümmungsradien zwischen der/den weiter vorstehenden Schneidkante(n) (die grundsätzlich durch die zwei Nebenschneidkanten oder alternativ durch die Zentrumschneidkante gebildet werden kann/können) und den jeweils angrenzenden Übergangskanten ≤ 0,3 mm sind. Durch solch einen relativ kleinen Krümmungsradius wird der Span in diesem Bereich effektiv längs der Spanbildungsrichtung eingeschnitten, was vorteilhaft im Hinblick auf eine Spanteilung ist. Insbesondere liegt der Krümmungsradius r jeweils in einem Bereich von 0,1 mm ≤ r ≤ 0,3 mm. Gemäß einer Weiterbildung laufen die jeweiligen Kanten linear in die Übergänge zwischen Zentrumschneidkante und Übergangskanten und/oder in die Übergänge zwischen Übergangskanten und Nebenschneidkanten, insbesondere mit einer Neigung innerhalb der oberhalb angegebenen Winkelbereiche, ein. Dabei kann an dem Übergang selbst jeweils ein Krümmungsradius, wie er oberhalb definiert ist, vorgesehen sein. Gemäß einer Weiterbildung gelten diese angegebenen Bereiche der Krümmungsradien und die Verläufe auch für die Krümmungsradien und Verläufe der Übergänge zwischen Zentrumspanfläche und den Übergangsflächen und/oder zwischen den Übergangsflächen und den Nebenspanflächen. Dabei wird der Krümmungsradius bezüglich dieser Flächen jeweils in einer parallel zu der Höhen- und Seitenrichtung ausgerichteten Schnittfläche gemessen.

Gemäß einer Weiterbildung steht die Zentrumschneidkante relativ zu der Auflagefläche weiter vor (bezüglich der Höhenrichtung und gegebenenfalls auch bezüglich der Tiefenrichtung) als die zwei Nebenschneidkanten. Entsprechend steht bei dieser Weiterbildung auch die Zentrumspanfläche weiter vor als die Nebenspanflächen. Dies ist im Hinblick auf die Positions-Stabilisierung des Schneideinsatzes relativ zu dem Werkstück vorteilhaft.

Gemäß einer Weiterbildung wird der Versatz zwischen den zwei Nebenschneidkanten und der Zentrumschneidkante jeweils zu mindestens 80% entlang der Höhenrichtung gebildet. Dementsprechend erstreckt sich der Versatz zu maximal 20% entlang der Tiefenrichtung. Diese Angaben gelten bezüglich einer Projektion des Versatzes auf die Höhenrichtung sowie auf die Tiefenrichtung. Gemäß einer Weiterbildung erstreckt sich der Versatz vollständig entlang der Höhenrichtung. Je höher der Anteil des Versatzes entlang der Tiefenrichtung ist, umso stärker wird an dem zu bearbeitenden Werkstück eine Profilbildung erzielt, ausgehend von keinem oder nur einem geringen Schneidenanstellwinkel des Schneideinsatzes relativ zu dem Werkstück. Als Schneidenanstellwinkel wird dabei der Winkel bezeichnet, mit dem die Haupterstreckungsebene der Auflagefläche des Schneideinsatzes im Einsatz gegenüber einer horizontalen Ebene parallel zu der Zentrumschneidkante (bzw. zu deren Haupterstreckungsrichtung) gekippt wird (bei einem Vorschub in horizontaler Richtung). Indem sich der Versatz bei der vorliegenden Weiterbildung vorwiegend oder vollständig entlang der Höhenrichtung erstreckt, wird ferner erreicht, dass sich die Übergangskante vollständig oder zumindest abschnittsweise weitgehend parallel zu der Bewegungsrichtung des Materials des Werkstücks im Berührungsbereich der Übergangskante mit dem Werkstück erstreckt, wodurch ein nicht-schneidender Abschnitt bereitgestellt wird. Dies ist vorteilhaft im Hinblick auf eine Positions-Stabilisierung des Schneideinsatzes relativ zu dem Werkstück und im Hinblick auf die Spanbildung.

Gemäß einer Weiterbildung verläuft eine Seitenrichtung parallel zu der Haupterstreckungsebene der Auflagefläche und entlang einer Haupterstreckungsrichtung der Zentrumschneidkante und der seitliche Abstand d zwischen der Zentrumschneidkante und den benachbarten Nebenschneidkanten entlang dieser Seitenrichtung liegt jeweils innerhalb des nachfolgenden Bereiches: 0,04 mm ≤ d ≤ 1,3 mm. Insbesondere liegt er innerhalb des Bereichs 0,13 mm ≤ d ≤ 0,8 mm. Dieser seitliche Abstand d entspricht gleichzeitig der seitlichen Erstreckungslänge der jeweiligen Übergangskante. Gemäß einer Weiterbildung liegt auch die seitliche Erstreckungslänge der Übergangsfläche, die sich in Tiefenrichtung an die Übergangskante anschließt, innerhalb des Bereichs von 0,04 mm bis 1,3 mm, insbesondere innerhalb des engeren Bereichs von 0,13 mm bis 0,8 mm. Gemäß einer Weiterbildung liegt der Versatz h zwischen den zwei Nebenschneidkanten und der Zentrumschneidkante entlang der Höhenrichtung jeweils innerhalb des nachfolgenden Bereiches: 1,2 mm ≤ h ≤ 3,5 mm. Insbesondere liegt er innerhalb des Bereichs 1,5 mm ≤ h ≤ 3,0 mm. Dieser Versatz h entlang der Höhenrichtung entspricht gleichzeitig der Höhe der jeweiligen Übergangskante. Gemäß einer Weiterbildung liegt auch der Versatz zwischen den zwei Nebenschneidflächen, die sich in Tiefenrichtung an die Nebenschneidkanten anschließen, und der Zentrumschneidfläche, die sich in Tiefenrichtung an die Zentrumschneidkante anschließt, jeweils innerhalb des Bereichs von 1,2 mm bis 3,5 mm, insbesondere innerhalb des Bereichs von 1,5 mm bis 3,0 mm. Dieser weitere und insbesondere der engere Bereich des seitlichen Abstands und des Versatzes entlang der Höhenrichtung haben sich als besonders bevorzugt im Hinblick auf eine Positions-Stabilisierung des Schneideinsatzes relativ zu dem Werkstück und im Hinblick auf die Spanbildung herausgestellt.

Grundsätzlich können die Zentrumschneidkante, die zwei Nebenschneidkanten und die zwei Übergangskanten jeweils einen gekrümmten Verlauf aufweisen. Grundsätzlich können auch die sich in Tiefenrichtung an die Kanten anschließenden Zentrumspanfläche, Nebenspanflächen und Übergangsflächen und/oder die sich in Höhenrichtung an die Kanten anschließenden Zentrumfreifläche, Nebenfreiflächen und Übergangsfreiflächen jeweils einen gekrümmten Verlauf aufweisen. Bevorzugt ist dabei, dass die genannten Kanten jeweils im Wesentlichen geradlinig und die genannten Flächen jeweils im Wesentlichen eben ausgebildet sind (abgesehen von gegebenenfalls vorzusehenden Rundungen, Phasen, etc.). Gemäß einer Weiterbildung sind die Zentrumschneidkante und die zwei Nebenschneidkanten jeweils im Wesentlichen geradlinig ausgebildet. Gemäß einer Weiterbildung sind die zwei Übergangskanten jeweils im Wesentlichen geradlinig ausgebildet. Dabei sind die Kanten (Zentrumschneidkante, Nebenschneidkanten und Übergangskanten) insbesondere jeweils genau geradlinig ausgebildet. Sie können dabei jeweils in ihren Randbereichen, welche die Übergänge zwischen Zentrumschneidkante und Übergangskanten sowie die Übergänge zwischen Übergangskanten und Nebenschneidkanten bilden, gerundet sein. Die Übergangskanten weisen dabei insbesondere in ihrem geradlinig ausgebildeten Bereich, der sich gegebenenfalls über deren gesamte Erstreckungslänge erstreckt, eine Neigung n im Bereich von 2° ≤ n ≤ 20°, insbesondere im Bereich von 5° ≤ n ≤ 15° relativ zu der Höhenrichtung auf.

Gemäß einer Weiterbildung ist/sind eine sich (in Tiefenrichtung) an die Zentrumschneidkante anschließende Zentrumspanfläche, zwei sich an die zwei Übergangskanten (in Tiefenrichtung) anschließenden Übergangsflächen und/oder zwei sich an die zwei Nebenschneidkanten (in Tiefenrichtung) anschließenden Nebenspanflächen jeweils im Wesentlichen eben ausgebildet. Insbesondere sind sie jeweils genau eben ausgebildet. Sie können dabei jeweils in ihren Randbereichen, welche die Übergänge zwischen Zentrumspanfläche und Übergangsflächen sowie die Übergänge zwischen Übergangsflächen und Nebenspanflächen bilden, gerundet sein.

Grundsätzlich können die Nebenschneidkanten (bzw. gegebenenfalls deren Haupterstreckungsrichtungen) geneigt zu der Zentrumschneidkante (bzw. gegebenenfalls zu deren Haupterstreckungsrichtung) ausgebildet sein. Dabei ist bevorzugt, dass die Neigung zwischen den Nebenschneidkanten (bzw. gegebenenfalls deren Haupterstreckungsrichtungen) relativ zu der Zentrumschneidkante (bzw. gegebenenfalls zu deren Haupterstreckungsrichtung) ≤ 30° ist. Die vorliegende Erfindung ist allgemein bei unterschiedlichen Längenverhältnissen zwischen der Erstreckungslänge der Zentrumschneidkante und der Erstreckungslänge der Nebenschneidkanten realisierbar. Auch sind unterschiedliche Gesamtlängen sämtlicher Schneidkanten und Kanten (Zentrumschneidkante, zwei Übergangskanten, zwei Nebenschneidkanten, gegebenenfalls weitere Nebenschneidkanten und/oder Übergangskanten, etc.) der Schneide entlang der Seitenrichtung möglich. Insbesondere liegt die Gesamtlänge im Bereich von 16 mm bis 60 mm. Ferner ist die vorliegende Erfindung unabhängig davon realisierbar, ob ein positiver oder negativer Freiwinkel (Winkel zwischen Freifläche und Höhenrichtung) an den, sich an die Schneidkanten bzw. Kanten (Zentrumschneidkante, Übergangskanten und Nebenschneidkanten) in Höhenrichtung anschließenden Freiflächen (Zentrumfreifläche, Übergangsfreiflächen und Nebenfreiflächen) vorgesehen ist. Im Einsatz sind entsprechend unterschiedliche Schneidenanstellwinkel des Schneideinsatzes relativ zu dem zu bearbeitenden Werkstück einstellbar. Ferner kann grundsätzlich auch vorgesehen sein, dass an der Zentrumschneidkante und an den Nebenschneidkanten jeweils unterschiedliche Spanwinkel (Winkel zwischen Spanfläche und Auflagefläche), unterschiedliche Freiwinkel und/oder unterschiedliche Keilwinkel (Winkel zwischen Spanfläche und Freifläche) ausgebildet sind. Bevorzugt ist jedoch, dass die Spanwinkel, Freiwinkel und Keilwinkel bei der Zentrumschneidkante und bei den Nebenschneidkanten identisch sind oder zumindest ähnliche Werte aufweisen.

Die vorliegende Erfindung betrifft ferner ein Verfahren zum Bearbeiten eines Werkstückes mittels Stech-Drehen unter Verwendung eines Schneideinsatzes mit einer Schneide gemäß Anspruch 13.

Bei dem erfindungsgemäßen Verfahren sind die oberhalb in Bezug auf den erfindungsgemäßen Schneideinsatz erläuterten Weiterbildungen und Varianten in entsprechender Weise realisierbar. Dabei werden im Wesentlichen die oberhalb erläuterten Vorteile erzielt. Insbesondere liegt die Neigung der Übergangskanten über den Abschnitt hinweg in einem Bereich von (einschließlich) 5° bis (einschließlich) 15° relativ zu der Bewegungsrichtung des Materials. Unter einer "im Wesentlichen senkrechten" Ausrichtung der Zentrumschneidkante relativ zu der Bewegungsrichtung des Materials des Werkstücks wird insbesondere ein Winkelbereich von ± 30° relativ zu einer exakt senkrechten Ausrichtung verstanden. Die Schneidkanten (Zentrumschneidkante, Nebenschneidkanten) der Schneide sind insbesondere im Wesentlichen parallel zu der Oberfläche des zu bearbeitenden Werkstücks im Berührungsbereich der Schneide mit dem Werkstück ausgerichtet.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen:
- Fig. 1:: eine perspektivische Ansicht eines Schneideinsatzes gemäß einer Ausführungsform der Erfindung;
- Fig. 2:: eine Draufsicht von oben auf den Schneideinsatz von Fig. 1;
- Fig. 3A:: eine Ansicht von vorne auf den Schneideinsatz von Fig. 1;
- Fig. 3B:: eine vergrößerte Darstellung eines Ausschnitts der Fig. 3A;
- Fig. 4:: eine Querschnittansicht des Schneideinsatzes von Fig. 1; und
- Fig. 5A-5D:: eine schematische Darstellung von Kantenverläufen der Zentrumschneidkante, der Übergangskanten und der Nebenschneidkanten gemäß verschiedener Ausführungsformen der Erfindung.

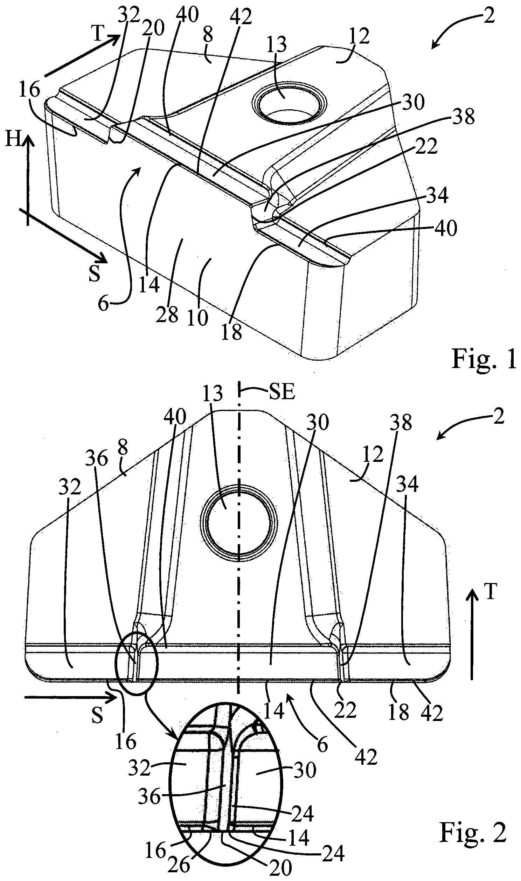

Nachfolgend wird unter Bezugnahme auf die Figuren 1-4 der Aufbau eines erfindungsgemäßen Schneideinsatzes -2- gemäß einer Ausführungsform der vorliegenden Erfindung erläutert. Der Schneideinsatz -2- bildet eine Schwerzerspanungs-Stechplatte zum Schwerzerspanungs-Stech-Drehen von metallischen Werkstücken. Der Schneideinsatz -2- weist eine eben ausgebildete, bodenseitige Auflagefläche -4- auf, die sich entlang einer Seitenrichtung -S- und einer Tiefenrichtung -T- erstreckt. Eine Höhenrichtung -H- steht senkrecht auf der, durch die bodenseitige Auflagefläche -4- gebildeten Ebene (d.h. senkrecht auf der Seitenrichtung -S-und der Tiefenrichtung -T-). Der Schneideinsatz -2- weist eine Schneide -6- auf, deren Haupterstreckungsrichtung parallel zu der Seitenrichtung -S- verläuft. Die Schneide -6- ist an einer Kante des Schneideinsatzkörpers -8- zwischen einer Seitenfläche -10- und einer Deckfläche -12- desselben ausgebildet, wobei die Deckfläche -12- gegenüberliegend von der bodenseitigen Auflagefläche -4-angeordnet ist. Der Schneideinsatzkörper -8- weist ferner ein durchgehendes Befestigungsloch -13- auf, das zur Befestigung des Schneideinsatzes -2- in einer (nicht dargestellten) Aufnahme eines Werkzeughalters mittels einer Schraube oder mittels eines Zapfens dient.

Die Schneidkanten der Schneide -6- werden bei der dargestellten Ausführungsform durch eine (einzige) Zentrumschneidkante -14- und durch (genau) zwei Nebenschneidkanten -16-, -18- gebildet. Die zwei Nebenschneidkanten -16-, -18- sind bezüglich der Seitenrichtung -S- beidseitig von der Zentrumschneidkante -14- und seitlich beabstandet von derselben angeordnet. Ferner sind sie in Höhenrichtung -H- derart zu der Zentrumschneidkante -14- versetzt, dass die Zentrumschneidkante -14- relativ zu der bodenseitigen Auflagefläche -4- weiter nach oben (d.h. in Höhenrichtung) vorsteht als die Nebenschneidkanten -16-, -18-. Zwischen der Zentrumschneidkante -14- und den Nebenschneidkanten -16-, -18- ist jeweils eine Übergangskante -20-, -22- vorgesehen. Die Übergangskanten -20-, -22-verbinden jeweils die Zentrumschneidkante -14- mit den Nebenschneidkanten -16-, -18-. Die Zentrumschneidkante -14- und die Nebenschneidkanten -16-, -18- sind abgesehen von ihren jeweiligen Randbereichen, an denen jeweils eine Rundung zum Übergang auf die Übergangskanten -20-, -22- vorgesehen ist, linear ausgebildet. Sie verlaufen parallel zueinander und entlang der Seitenrichtung -S-. Auch die Übergangskanten -20-, -22- sind jeweils abgesehen von ihren beidseitigen Randbereichen linear ausgebildet. An ihren Randbereichen wiederum sind Rundungen zum Übergang auf die Zentrumschneidkante -14- und zum Übergang auf die jeweilige Nebenschneidkante -16- bzw. -18- vorgesehen (vgl. insbesondere die vergrößerte Darstellung des Ausschnitts in Fig. 2).

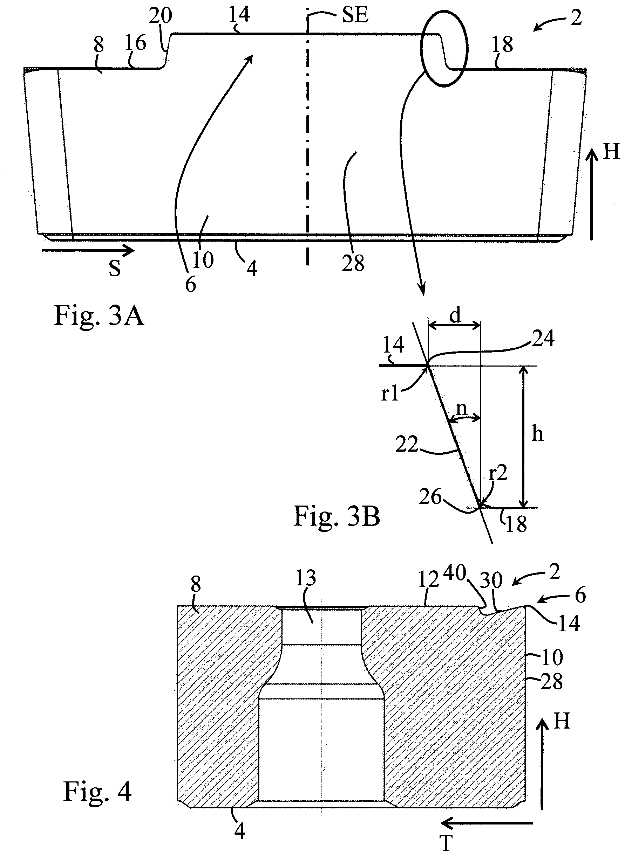

Der Kantenverlauf von der Zentrumschneidkante -14- über die Übergangskante -22- auf die Nebenschneidkante -18- ist insbesondere anhand der Vorderansicht (entlang der Tiefenrichtung -T-) in Fig. 3A und insbesondere anhand der vergrößerten Darstellung in Fig. 3B ersichtlich. Die Zentrumschneidkante -14- und die Übergangskante -22- laufen jeweils linear in deren Übergang -24- ein, wobei der Übergang -24- vorliegend einen Krümmungsradius -r1- von 0,2 mm aufweist. Dieser Übergang -24- ist insbesondere im Hinblick auf die Spanteilung relevant und weist dementsprechend einen relativ kleinen Krümmungsradius auf. Die Übergangskante -22- und die Nebenschneidkante -18- laufen wiederum linear in deren Übergang -26- ein, wobei der Übergang -26- vorliegend einen Krümmungsradius -r2- von 0,5 mm aufweist. Bei der dargestellten Ausführungsform wird der Versatz zwischen den Nebenschneidkanten -16-, 18- und der Zentrumschneidkante -14- ausschließlich in Höhenrichtung -H-gebildet, wobei dieser Versatz -h- in Höhenrichtung vorliegend 2,5 mm beträgt. Fermer ist vorliegend der lineare Abschnitt der Übergangskante -22- mit einer Neigung -n- von 10° relativ zu der Höhenrichtung -H- geneigt. Dementsprechend ist die Übergangskante -22- im Wesentlichen über ihre gesamte, seitliche Erstreckungslänge -d- (abgesehen von den, mit einer Rundung versehenen Randbereichen) aufgrund ihrer relativ geringen Neigung zur Höhenrichtung -H- nicht-schneidend. Die seitliche Erstreckungslänge -d-entspricht dabei dem seitlichen Abstand -d- zwischen der Zentrumschneidkante -14- und der benachbarten Nebenschneidkante -18-entlang der Seitenrichtung -S-.

Wie insbesondere anhand der Figuren 2 und 3A ersichtlich ist, ist der Schneideinsatz -2- und insbesondere der Kantenverlauf der Zentrumschneidkante -14-, der zwei Übergangskanten -20-, -22- und der zwei Nebenschneidkanten -16-, -18- spiegelsymmetrisch zu einer Symmetrieebene -SE- ausgebildet. Ferner ist der Kantenverlauf durchgehend Kanten-überlappungsfrei ausgebildet. Die Symmetrieebene -SE- verläuft dabei senkrecht zu einer Erstreckungsrichtung der (geradlinig verlaufenden) Zentrumschneidkante -14- und schneidet die Zentrumschneidkante -14- in deren Mitte. Die Symmetrieebene -SE- wird vorliegend durch die Höhenrichtung -H- und die Tiefenrichtung -T- aufgespannt. In Fig. 4 ist eine Querschnittansicht des Schneideinsatzes -2- entlang der Symmetrieebene -SEdargestellt. Bei der vorliegenden Ausführungsform erstreckt sich die, in Höhenrichtung an die Kanten (Zentrumschneidkante -14-, Übergangskanten -20-, -22- und Nebenschneidkanten -16-, -18-) anschließende Freifläche -28-, die durch die Seitenfläche -10- des Schneideinsatzkörpers -8-gebildet wird, durchgehend mit einem Winkel von 90° zu der bodenseitigen Auflagefläche -4-. Dementsprechend ist bei der vorliegenden Ausführungsform kein Freiwinkel vorgesehen. Im Einsatz wird der Schneideinsatz -2- mit einem entsprechenden Schneidenanstellwinkel, beispielsweise von 6°, angestellt. In Tiefenrichtung -T- schließen sich an die Zentrumschneidkante -14- eine

Zentrumspanfläche -30-, an die Nebenschneidkanten -16-, -18- jeweils Nebenspanflächen -32-, -34- und an die Übergangskanten -20-, -22-Übergangsflächen -36-, -38- an, entlang welcher im Einsatz die Späne geführt werden. Die Zentrumspanfläche -30- und die Nebenspanflächen -32-, -34-fallen entlang der Tiefenrichtung -T- leicht in der Höhe ab (vgl. Fig. 1 und 4), bis sie jeweils in einen Spanrücken -40- übergehen, welcher der Spanführung und Spanbrechung dient. Abgesehen von jeweiligen Rundungen in den Übergangsbereichen sind die Zentrumspanfläche -30-, die Nebenspanflächen -32-, -34- und die Übergangsflächen -36-, -38- jeweils als ebene Flächen ausgebildet, die in ihrem Verlauf im Wesentlichen dem oberhalb beschriebenen Kantenverlauf der Zentrumschneidkante -14-, den zwei Nebenschneidkanten -16-, -18- und den zwei Übergangskanten -20-, -22-folgen. Der Spanwinkel und der Keilwinkel ist im Bereich der Zentrumschneidkante -14- im Wesentlichen gleich groß wie im Bereich der Nebenschneidkanten -16-, -18- ausgebildet. Wie anhand der Figuren 1, 2 und 4 ersichtlich ist, sind die Zentrumschneidkante -14- und die zwei Nebenschneidkanten -16-, -18- jeweils mit einer Phase -42- versehen.

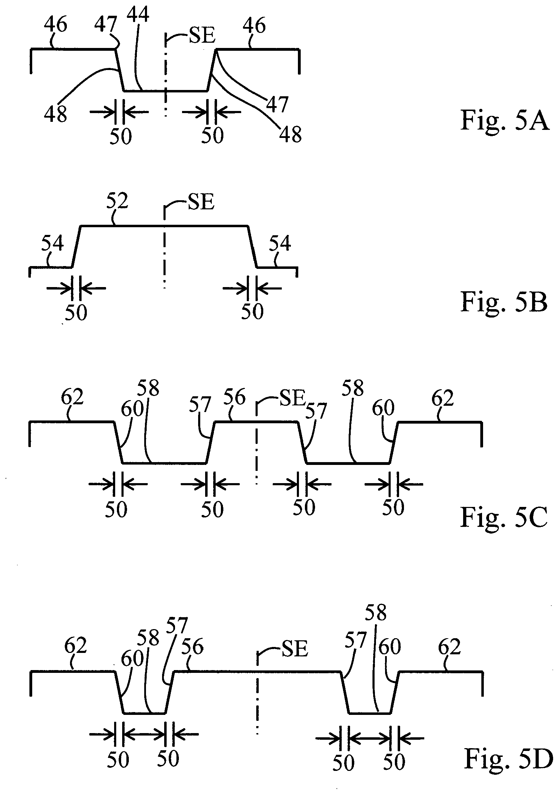

Bei der in den Figuren 1 bis 4 dargestellten Ausführungsform ist die Zentrumschneidkante -14- (ausschließlich) in Höhenrichtung -H- nach oben versetzt zu den Nebenschneidkanten -16-, -18- ausgebildet. Daneben sind auch andere Kantenverläufe möglich, wie nachfolgend anhand einiger Beispiele unter Bezugnahme auf die Figuren 5A bis 5D erläutert wird. Dabei sind in den Figuren 5A bis 5D schematisch verschiedene Kantenverläufe von einer Zentrumschneidkante und zwei oder mehreren Nebenschneidkanten und Übergangskanten dargestellt. Dabei wird vorwiegend auf die Unterschiede gegenüber der ersten, unter Bezugnahme auf die Figuren 1 bis 4 erläuterten Ausführungsform eingegangen. Bei den Figuren 5A bis 5D kann sich der Versatz zwischen der Zentrumschneidkante und den Nebenschneidkanten in Höhenrichtung und gegebenenfalls auch in Tiefenrichtung erstrecken, wobei sich der Versatz vorzugsweise zu mindestens 80% entlang der Höhenrichtung erstreckt. Die Neigung der Übergangskanten liegt jeweils in einem Bereich von 2° bis 20° relativ zu der Höhenrichtung. Die in den Figuren 5A bis 5D dargestellten Kantenverläufe sind durchgehend spiegelsymmetrisch zu der Symmetrieebene -SE- ausgebildet, die wiederum senkrecht zu der Erstreckungsrichtung der Zentrumschneidkante verläuft und diese mittig schneidet.

Bei dem in Fig. 5A dargestellten Kantenverlauf ist die Zentrumschneidkante -44- relativ zu den Nebenschneidkanten -46- (in Höhenrichtung und gegebenenfalls auch in Tiefenrichtung) zurückversetzt. Bei dieser Ausführungsform sind im Hinblick auf eine effektive Spanteilung insbesondere die Übergänge -47- zwischen den Nebenschneidkanten -46- und den jeweils angrenzenden Übergangskanten -48- mit einem relativ kleinen Krümmungsradius, insbesondere mit einem Krümmungsradius von ≤ 0,3 mm, zu versehen.

Die Übergangskanten in den Figuren 5A bis 5D erstrecken sich jeweils linear und weisen durchgehend eine Neigung von 10° relativ zu der Höhenrichtung auf. Sie bilden dementsprechend im Wesentlichen über ihre gesamte, seitliche Erstreckungslänge (abgesehen von gegebenenfalls an ihren Randbereichen vorgesehenen Rundungen) jeweils einen nicht-schneidenden Abschnitt -50-. Diese nicht-schneidenden Abschnitte -50- sind in den Fig. 5A bis 5D jeweils schematisch dargestellt. Abgesehen von diesen nicht-schneidenden Abschnitten -50- ist der Kantenverlauf bei den verschiedenen Ausführungsformen jeweils über dessen gesamte, seitliche Erstreckungslänge schneidend ausgebildet.

In Fig. 5B ist die seitliche Erstreckungslänge der Zentrumschneidkante -52-deutlich länger als die seitliche Erstreckungslänge der Nebenschneidkanten -54-. Im Übrigen entspricht der Kantenverlauf weitgehend dem, unter Bezugnahme auf die Figuren 1 bis 4 erläuterten Kantenverlauf.

In Fig. 5C entspricht der Kantenverlauf der Zentrumschneidkante -56-, der beidseitig davon vorgesehenen Nebenschneidkanten -58- und der verbindenden Übergangskanten -57- weitgehend dem, unter Bezugnahme auf die Fig. 1 bis 4 erläuterten Kantenverlauf. Beidseitig an die Nebenschneidkanten -58- schließen sich weitere Übergangskanten -60- an, welche jeweils die Nebenschneidkanten -58- mit weiteren Nebenschneidkanten -62- verbinden. Die weiteren Nebenschneidkanten -62-sind dabei seitlich von den Nebenschneidkanten -58- beabstandet und höhenversetzt und gegebenenfalls auch tiefenversetzt zu den Nebenschneidkanten -58- angeordnet. Die weiteren Nebenschneidkanten -62-weisen bezüglich der Höhenrichtung und der Tiefenrichtung die gleiche Position wie die Zentrumschneidkante -56- auf. Bei dieser Ausführungsform bilden die zwei Übergangskanten -57- und die zwei weiteren Übergangskanten -60- über ihre gesamte, seitliche Erstreckungslänge (abgesehen von gegebenenfalls an ihren Randbereichen vorgesehenen Rundungen) jeweils nicht-schneidende Abschnitte -50-.

In Fig. 5D entspricht der Kantenverlauf weitgehend dem in Fig. 5C dargestellten Kantenverlauf, wobei wiederum die gleichen Bezugszahlen verwendet werden. Im Unterschied zu der Fig. 5C ist die seitliche Erstreckungslänge der Zentrumschneidkante -56- deutlich länger als die seitliche Erstreckungslänge der benachbarten Nebenschneidkanten -58-.

Die vorliegende Erfindung ist nicht auf die unter Bezugnahme auf die Figuren erläuterten Ausführungsbeispiele beschränkt. Insbesondere sind auch andere Verläufe der Übergangskanten möglich. Insbesondere kann auch vorgesehen sein, dass bei mindestens einem Teilbereich der seitlichen Erstreckungslänge der Übergangskanten eine Kantenüberlappung auftritt und/oder die Neigung relativ stark zu der Höhenrichtung (insbesondere mehr als 20°) geneigt ist, während ein weiterer Teilbereich der seitlichen Erstreckungslänge Kanten-überlappungsfrei ist und zumindest über einen Abschnitt hinweg eine relativ geringe Neigung (insbesondere weniger als 20°) relativ zu der Höhenrichtung aufweist. Weiterhin sind auch andere Verläufe der Zentrumschneidkante und der Nebenschneidkanten, insbesondere gekrümmte Verläufe, möglich.

## Patentansprüche

1. Schneideinsatz (2) aufweisend:
eine bodenseitige Auflagefläche (4),
eine Zentrumschneidkante (14; 44; 52; 56),
zwei Nebenschneidkanten (16, 18; 46; 54; 58), die beidseitig von der Zentrumschneidkante (14; 44; 52; 56) und relativ zu der Zentrumschneidkante (14; 44; 52; 56) versetzt ausgebildet sind, und
zwei Übergangskanten (20, 22; 48; 57), welche die Zentrumschneidkante (14; 44; 52; 56) mit der jeweils benachbarten Nebenschneidkante (16, 18; 46; 54; 58) verbinden,
wobei die zwei Nebenschneidkanten (16, 18; 46; 54; 58) jeweils höhenversetzt und gegebenenfalls auch tiefenversetzt zu der Zentrumschneidkante (14; 44; 52; 56) ausgebildet sind,
**dadurch gekennzeichnet, dass** die zwei Nebenschneidkanten (16, 18; 46; 54; 58) jeweils über einen Kanten-überlappungsfreien Bereich seitlich beabstandet von der Zentrumschneidkante (14; 44; 52; 56) ausgebildet sind und die Übergangskanten (20, 22; 48; 57) jeweils in dem Kanten-überlappungsfreien Bereich zumindest über einen Abschnitt (50) hinweg eine Neigung n mit 2° ≤ n ≤ 20° relativ zu einer, senkrecht zu einer Haupterstreckungsebene der Auflagefläche (4) verlaufenden Höhenrichtung (H) aufweisen, derart dass der betreffende Abschnitt der Übergangskante unabhängig von dem Schneidenanstellwinkel des Schneideinsatzes im Einsatz in Eingriff mit dem Material des Werkstücks gelangt.

2. Schneideinsatz gemäß Anspruch 1, **dadurch gekennzeichnet,**
**dass** die Übergangskanten (20, 22; 48; 57) jeweils in einem Kanten-überlappungsfreien Bereich zumindest über einen Abschnitt (50) hinweg eine Neigung n mit 5° ≤ n ≤ 15° relativ zu der Höhenrichtung (H) aufweisen.

3. Schneideinsatz gemäß Anspruch 1 oder 2, **dadurch gekennzeichnet,**
**dass** der Kantenverlauf der Zentrumschneidkante (14; 44; 52; 56), der zwei Übergangskanten (20, 22; 48; 57) und der zwei Nebenschneidkanten (16, 18; 46; 54; 58) im Wesentlichen spiegelsymmetrisch relativ zu einer, parallel zu der Höhenrichtung (H) und senkrecht zu einer Haupterstreckungsrichtung der Zentrumschneidkante (14; 44; 52; 56) verlaufenden Symmetrieebene (SE) ist.

4. Schneideinsatz gemäß einem der vorangehenden Ansprüche,
**dadurch gekennzeichnet, dass** der Kantenverlauf der Zentrumschneidkante (14; 44; 52; 56), der zwei Übergangskanten (20, 22; 48; 57) und der zwei Nebenschneidkanten (16, 18; 46; 54; 58) durchgehend Kanten-überlappungsfrei ausgebildet ist.

5. Schneideinsatz gemäß einem der vorangehenden Ansprüche,
**dadurch gekennzeichnet, dass** die Übergänge (24) zwischen Zentrumschneidkante (14; 44; 52; 56) und den Übergangskanten (20, 22; 48; 57) und/oder die Übergänge (26) zwischen den Übergangskanten (20, 22; 48; 57) und den Nebenschneidkanten (16, 18; 46; 54; 58) jeweils einen Krümmungsradius (r1; r2) von ≤ 0,3 mm aufweisen.

6. Schneideinsatz gemäß einem der vorangehenden Ansprüche,
**dadurch gekennzeichnet, dass** die Zentrumschneidkante (14; 52; 56) relativ zu der Auflagefläche (4) weiter vorsteht als die zwei Nebenschneidkanten (16, 18; 54; 58).

7. Schneideinsatz gemäß einem der vorangehenden Ansprüche,
**dadurch gekennzeichnet, dass** der Versatz zwischen den zwei Nebenschneidkanten (16, 18; 46; 54; 58) und der Zentrumschneidkante (14; 44; 52; 56) jeweils zu mindestens 80% entlang der Höhenrichtung (H) gebildet wird.

8. Schneideinsatz gemäß einem der vorangehenden Ansprüche,
**dadurch gekennzeichnet, dass** eine Seitenrichtung (S) parallel zu der Haupterstreckungsebene der Auflagefläche (4) und entlang einer Haupterstreckungsrichtung der Zentrumschneidkante (14; 44; 52; 56) verläuft und dass der seitliche Abstand d zwischen der Zentrumschneidkante (14; 44; 52; 56) und den benachbarten Nebenschneidkanten (16, 18; 46; 54; 58) entlang dieser Seitenrichtung (S) jeweils innerhalb des nachfolgenden Bereiches liegt: 0,04 mm ≤ d ≤ 1,3 mm.

9. Schneideinsatz gemäß einem der vorangehenden Ansprüche,
**dadurch gekennzeichnet, dass** der Versatz h zwischen den zwei Nebenschneidkanten (16, 18; 46; 54; 58) und der Zentrumschneidkante (14; 44; 52; 56) entlang der Höhenrichtung (H) jeweils innerhalb des nachfolgenden Bereiches liegt: 1,2 mm ≤ h ≤ 3,5 mm.

10. Schneideinsatz gemäß einem der vorangehenden Ansprüche,
**dadurch gekennzeichnet, dass** die Zentrumschneidkante (14; 44; 52; 56) und die zwei Nebenschneidkanten (16, 18; 46; 54; 58) jeweils im Wesentlichen geradlinig ausgebildet sind.

11. Schneideinsatz gemäß einem der vorangehenden Ansprüche,
**dadurch gekennzeichnet, dass** die zwei Übergangskanten (20, 22; 48; 57) jeweils im Wesentlichen geradlinig ausgebildet sind.

12. Schneideinsatz gemäß einem der vorangehenden Ansprüche,
**dadurch gekennzeichnet, dass** eine sich an die Zentrumschneidkante (14; 44; 52; 56) anschließende Zentrumspanfläche (30), zwei sich an die zwei Übergangskanten (20, 22; 48; 57) anschließenden Übergangsflächen (36, 38) und/oder zwei sich an die zwei Nebenschneidkanten (16, 18; 46; 54; 58) anschließenden Nebenspanflächen (32, 34) jeweils im Wesentlichen eben ausgebildet ist/sind.

13. Verfahren zum Bearbeiten eines Werkstückes mittels Stech-Drehen unter Verwendung eines Schneideinsatzes (2) mit einer Schneide (6), die eine Zentrumschneidkante (14; 44; 52; 56), zwei Nebenschneidkanten (16, 18; 46; 54; 58), die beidseitig und jeweils über einen Kanten-überlappungsfreien Bereich seitlich beabstandet von der Zentrumschneidkante (14; 44; 52; 56) und relativ zu der Zentrumschneidkante (14; 44; 52; 56) versetzt ausgebildet sind, und zwei Übergangskanten (20, 22; 48; 57), welche die Zentrumschneidkante (14; 44; 52; 56) mit der jeweils benachbarten Nebenschneidkante (16, 18; 46; 54; 58) verbinden, aufweist, wobei das Verfahren nachfolgende Schritte aufweist:
A) Rotieren des zu bearbeitenden Werkstückes; und
B) Einstechen des Schneideinsatzes (2) in das rotierende, zu bearbeitende Werkstück mit einer Ausrichtung derart, dass die Zentrumschneidkante (14; 44; 52; 56) im Wesentlichen senkrecht zu einer Bewegungsrichtung des Materials des Werkstücks im Berührungsbereich der Schneide (6) mit dem Werkstück ausgerichtet ist und dass die Übergangskanten (20, 22; 48; 57) in dem Kanten-überlappungsfreien Bereich über einen Abschnitt hinweg eine Neigung in einem Bereich von 2° bis 20° relativ zu dieser Bewegungsrichtung des Materials des Werkstücks im Berührungsbereich der Schneide (6) mit dem Werkstück aufweisen, derart dass der betreffende Abschnitt der Übergangskante unabhängig von dem Schneidenanstellwinkel des Schneideinsatzes im Einsatz in Eingriff mit dem Material des Werkstücks gelangt.

## Claims

1. A cutting insert (2) comprising:
a bottom supporting surface (4),
a center cutting edge (14; 44; 52; 56),
two secondary cutting edges (16, 18; 46; 54; 58) which are realized on both sides of the center cutting edge (14; 44; 52; 56) and are offset in relation to the center cutting edge (14; 44; 52; 56) and
two transition edges (20, 22; 48; 57) which connect the center cutting edge (14; 44; 52; 56) to the secondary cutting edge adjacent in each case (16, 18; 46; 54; 58),
wherein the two secondary cutting edges (16, 18; 46; 54; 58) are formed in each case vertically offset and, where applicable, also offset in depth with respect to the center cutting edge (14; 44; 52; 56),
**characterized in that**
the two secondary cutting edges (16, 18; 46; 54; 58) are in each case laterally spaced from the center cutting edge (14; 44; 52; 56) by a non-edge-overlapping region, and **in that** the transition edges (20, 22; 48; 57), in each case in the non-edge-overlapping region, have at least over a portion (50) an inclination n where 2° ≤ n ≤ 20° in relation to a height direction (H) which extends at right angles with respect to a main extension plane of the supporting surface (4) such that the corresponding portion of the transition edge moves in use into engagement with the material of the workpiece independently of the set angle of the cutting edge of the cutting insert.

2. The cutting insert as claimed in claim 1, **characterized in that** the transition edges (20, 22; 48; 57), in each case in a non-edge-overlapping region, have at least over a portion (50) an inclination n where 5° ≤ n ≤ 15° in relation to the height direction (H).

3. The cutting insert as claimed in claim 1 or 2, **characterized in that** the edge development of the center cutting edge (14; 44; 52; 56), of the two transition edges (20, 22; 48; 57) and of the two secondary cutting edges (16, 18; 46; 54; 58) is substantially mirror-symmetrical in relation to a plane of symmetry (SE) which extends parallel to the height direction (H) and at right angles to a main extension direction of the center cutting edge (14; 44; 52; 56).

4. The cutting insert as claimed in one of the preceding claims, **characterized in that** the edge development of the center cutting edge (14; 44; 52; 56), of the two transition edges (20, 22; 48; 57) and of the two secondary cutting edges (16, 18; 46; 54; 58) is realized continuously non-edge-overlapping.

5. The cutting insert as claimed in one of the preceding claims, **characterized in that** the transitions (24) between the center cutting edge (14; 44; 52; 56) and the transition edges (20, 22; 48; 57) and/or the transitions (26) between the transition edges (20, 22; 48; 57) and the secondary cutting edges (16, 18; 46; 54; 58) have in each case a radius of curvature (r1; r2) of ≤ 0.3 mm.

6. The cutting insert as claimed in one of the preceding claims, **characterized in that** the center cutting edge (14; 52; 56) protrudes further forward in relation to the supporting surface (4) than the two secondary cutting edges (16, 18; 54; 58).

7. The cutting insert as claimed in one of the preceding claims, **characterized in that** the offset between the two secondary cutting edges (16, 18; 46; 54; 58) and the center cutting edge (14; 44; 52; 56) is formed in each case to be at least 80% along the height direction (H).

8. The cutting insert as claimed in one of the preceding claims, **characterized in that** a lateral direction (S) extends parallel to the main extension plane of the supporting surface (4) and along a main extension direction of the center cutting edge (14; 44; 52; 56) and **in that** the lateral spacing d between the center cutting edge (14; 44; 52; 56) and the adjacent secondary cutting edges (16, 18; 46; 54; 58) along said lateral direction (S) lies in each case within the following range: 0.04 mm ≤ d ≤ 1.3 mm.

9. The cutting insert as claimed in one of the preceding claims, **characterized in that** the offset h between the two secondary cutting edges (16, 18; 46; 54; 58) and the center cutting edge (14; 44; 52; 56) lies along the height direction (H) in each case within the following range: 1.2 mm ≤ h ≤ 3.5 mm.

10. The cutting insert as claimed in one of the preceding claims, **characterized in that** the center cutting edge (14; 44; 52; 56) and the two secondary cutting edges (16, 18; 46; 54; 58) are realized in each case in a substantially rectilinear manner.

11. The cutting insert as claimed in one of the preceding claims, **characterized in that** the two transition edges (20, 22; 48; 57) are realized in each case in a substantially rectilinear manner.

12. The cutting insert as claimed in one of the preceding claims, **characterized in that** one center rake face (30) which connects to the center cutting edge (14; 44; 52; 56), two transition faces (36, 38) which connect to the two transition edges (20, 22; 48; 57) and/or two secondary rake faces (32, 34) which connect to the two secondary cutting edges (16, 18; 46; 54; 58) is/are realized in each case in a substantially even manner.

13. A method for processing a workpiece by means of groove turning using a cutting insert (2) with a cutting edge (6) which has a center cutting edge (14; 44; 52; 56), two secondary cutting edges (16, 18; 46; 54; 58) which are realized on both sides of the center cutting edge (14; 44; 52; 56), are in each case laterally spaced from the center cutting edge (14; 44; 52; 56) by a non-edge-overlapping region and are offset in relation to the center cutting edge (14; 44; 52; 56), and two transition edges (20, 22; 48; 57) which connect the center cutting edge (14; 44; 52; 56) in each case to the adjacent secondary cutting edge (16, 18; 46; 54; 58), wherein the method comprises the following steps:
A) rotate the workpiece to be processed; and
B) infeed the cutting insert (2) into the rotating workpiece to be processed with an alignment such that the center cutting edge (14; 44; 52; 56) is aligned in the contact region of the cutting edge (6) with the workpiece substantially at right angles to a direction of movement of the material of the workpiece and in that the transition edges (20, 22; 48; 57), in the non-edge-overlapping region, over a portion have an inclination in the contact region of the edge (6) with the workpiece within a range of between 2° and 20° in relation to said direction of movement of the material of the workpiece such that the corresponding portion of the transition edge moves in use into engagement with the material of the workpiece independently of the set angle of the cutting edge of the cutting insert.

## Revendications

1. Insert de coupe (2), présentant :
une surface d'appui (4) du côté de sol,
une arête de coupe centrale (14 ; 44 ; 52 ; 56),
deux arêtes de coupe secondaires (16, 18 ; 46 ; 54 ; 58) qui sont réalisées de part et d'autre de l'arête de coupe centrale (14 ; 44 ; 52 ; 56) et de manière décalée par rapport à l'arête de coupe centrale (14 ; 44 ; 52 ; 56), et
deux arêtes de transition (20, 22 ; 48 ; 57) qui relient l'arête de coupe centrale (14 ; 44 ; 52 ; 56) à l'arête de coupe secondaire respectivement adjacente (16, 18 ; 46 ; 54 ; 58), les deux arêtes de coupe secondaires (16, 18 ; 46 ; 54 ; 58) étant à chaque fois réalisées de manière décalée en hauteur et éventuellement également en profondeur par rapport à l'arête de coupe centrale (14 ; 44 ; 52 ; 56),
**caractérisé en ce que** les deux arêtes de coupe secondaires (16, 18 ; 46 ; 54 ; 58) sont à chaque fois réalisées de manière espacée latéralement de l'arête de coupe centrale (14 ; 44 ; 52 ; 56) par le biais d'une région exempte de chevauchement des arêtes et les arêtes de transition (20, 22 ; 48 ; 57) présentent, à chaque fois dans la région exempte de chevauchement des arêtes, au moins au-delà d'une portion (50), une inclinaison n avec 2° ≤ n ≤ 20° par rapport à une direction en hauteur (H) s'étendant perpendiculairement à un plan d'étendue principale de la surface d'appui (4), de telle sorte que la portion concernée de l'arête de transition, indépendamment de l'angle d'inclinaison des arêtes de l'insert de coupe utilisé, vienne en prise avec le matériau de la pièce.

2. Insert de coupe selon la revendication 1, **caractérisé en ce que** les arêtes de transition (20, 22 ; 48 ; 57) présentent à chaque fois dans une région exempte de chevauchement des arêtes, au moins au-delà d'une portion (50), une inclinaison n avec 5° ≤ n ≤ 15° par rapport à la direction en hauteur (H).

3. Insert de coupe selon la revendication 1 ou 2, **caractérisé en ce que** l'allure d'arête de l'arête de coupe centrale (14 ; 44 ; 52 ; 56), des deux arêtes de transition (20, 22 ; 48 ; 57) et des deux arêtes de coupe secondaires (16, 18 ; 46 ; 54 ; 58) est essentiellement symétrique par rapport à un plan de symétrie (SE) s'étendant parallèlement à la direction en hauteur (H) et perpendiculairement à une direction d'étendue principale de l'arête de coupe centrale (14 ; 44 ; 52 ; 56).

4. Insert de coupe selon l'une quelconque des revendications précédentes, **caractérisé en ce que** l'allure d'arête de l'arête de coupe centrale (14 ; 44 ; 52 ; 56), des deux arêtes de transition (20, 22 ; 48 ; 57) et des deux arêtes de coupe secondaires (16, 18 ; 46 ; 54 ; 58) est réalisée de manière continue sans chevauchement des arêtes.

5. Insert de coupe selon l'une quelconque des revendications précédentes, **caractérisé en ce que** les transitions (24) entre l'arête de coupe centrale (14 ; 44 ; 52 ; 56) et les arêtes de transition (20, 22 ; 48 ; 57) et/ou les transitions (26) entre les arêtes de transition (20, 22 ; 48 ; 57) et les arêtes de coupe secondaires (16, 18 ; 46 ; 54 ; 58) présentent à chaque fois un rayon de courbure (r1 ; r2) ≤ 0,3 mm.

6. Insert de coupe selon l'une quelconque des revendications précédentes, **caractérisé en ce que** l'arête de coupe centrale (14 ; 52 ; 56) fait davantage saillie par rapport à la surface d'appui (4) que les deux arêtes de coupe secondaires (16, 18 ; 54 ; 58).

7. Insert de coupe selon l'une quelconque des revendications précédentes, **caractérisé en ce que** le décalage entre les deux arêtes de coupe secondaires (16, 18 ; 46 ; 54 ; 58) et l'arête de coupe centrale (14 ; 44 ; 52 ; 56) est à chaque fois formé sur au moins 80 % le long de la direction en hauteur (H).

8. Insert de coupe selon l'une quelconque des revendications précédentes, **caractérisé en ce qu'**une direction latérale (S) s'étend parallèlement au plan d'étendue principal de la surface d'appui (4) et le long d'une direction d'étendue principale de l'arête de coupe centrale (14 ; 44 ; 52 ; 56) et **en ce que** la distance latérale d entre l'arête de coupe centrale (14 ; 44 ; 52 ; 56) et les arêtes de coupe secondaires adjacentes (16, 18 ; 46 ; 54 ; 58) le long de cette direction latérale (S) est à chaque fois à l'intérieur de la plage suivant : 0,04 mm ≤ d ≤ 1,3 mm.

9. Insert de coupe selon l'une quelconque des revendications précédentes, **caractérisé en ce que** le décalage h entre les deux arêtes de coupe secondaires (16, 18 ; 46 ; 54 ; 58) et l'arête de coupe centrale (14 ; 44 ; 52 ; 56) le long de la direction en hauteur (H) est à chaque fois situé à l'intérieur de la plage suivante : 1,2 mm ≤ h ≤ 3,5 mm.

10. Insert de coupe selon l'une quelconque des revendications précédentes, **caractérisé en ce que** l'arête de coupe centrale (14 ; 44 ; 52 ; 56) et les deux arêtes de coupe secondaires (16, 18 ; 46 ; 54 ; 58) sont à chaque fois réalisées essentiellement sous forme rectiligne.

11. Insert de coupe selon l'une quelconque des revendications précédentes, **caractérisé en ce que** les deux arêtes de transition (20, 22 ; 48 ; 57) sont à chaque fois réalisées essentiellement sous forme rectiligne.

12. Insert de coupe selon l'une quelconque des revendications précédentes, **caractérisé en ce qu'**une surface d'enlèvement de copeaux centrale (30) se raccordant à l'arête de coupe centrale (14 ; 44 ; 52 ; 56), deux surfaces de transition (36, 38) se raccordant aux deux arêtes de transition (20, 22 ; 48 ; 57) et/ou deux arêtes d'enlèvement de copeaux secondaires (32, 34) se raccordant aux deux arêtes de coupe secondaires (16, 18 ; 46 ; 54 ; 58) sont à chaque fois réalisées essentiellement sous forme plane.

13. Procédé d'usinage d'une pièce par fonçage-tournage en utilisant l'insert de coupe (2) avec un tranchant (6) qui présente une arête de coupe centrale (14 ; 44 ; 52 ; 56), deux arêtes de coupe secondaires (16, 18 ; 46 ; 54 ; 58) qui sont réalisées de part et d'autre et à chaque fois de manière espacée latéralement par le biais d'une région exempte de chevauchement des arêtes à distance de l'arête de coupe centrale (14 ; 44 ; 52 ; 56) et de manière décalée par rapport à l'arête de coupe centrale (14 ; 44 ; 52 ; 56), et deux arêtes de transition (20, 22 ; 48 ; 57), qui relient l'arête de coupe centrale (14 ; 44 ; 52 ; 56) à l'arête de coupe secondaire respectivement adjacente (16, 18 ; 46 ; 54 ; 58), le procédé présentant les étapes suivantes :
A) rotation de la pièce à usiner ; et
B) enfoncement de l'insert de coupe (2) dans la pièce à usiner en rotation avec une orientation telle que l'arête de coupe centrale (14 ; 44 ; 52 ; 56) soit orientée essentiellement perpendiculairement à une direction de déplacement de la matière de la pièce dans la région de contact du tranchant (6) avec la pièce et que les arêtes de transition (20, 22 ; 48 ; 57) dans la région exempte de chevauchement des arêtes, au-delà d'une portion, présentent une inclinaison dans une plage de 2° à 20° par rapport à cette direction de déplacement de la matière de la pièce dans la région de contact du tranchant (6) avec la pièce, de telle sorte que la portion concernée de l'arête de transition, indépendamment de l'angle d'inclinaison du tranchant de l'insert de coupe pendant l'utilisation, vienne en prise avec la matière de la pièce.
